Europäisches Patentamt

European Patent Office

Office européen des brevets

(19)

(11) Veröffentlichungsnummer: **0 042 493**
**B1**

(12) **EUROPÄISCHE PATENTSCHRIFT**

(45) Veröffentlichungstag der Patentschrift:
**12.09.84**

(21) Anmeldenummer: **81103812.4**

(22) Anmeldetag: **18.05.81**

(51) Int. Cl.³: **F 16 K 1/22, F 23 L 13/02**

(54) **Schwenkbare Klappe.**

(30) Priorität: **19.06.80 DE 3022862**

(43) Veröffentlichungstag der Anmeldung:
**30.12.81 Patentblatt 81/52**

(45) Bekanntmachung des Hinweises auf die Patenterteilung:
**12.09.84 Patentblatt 84/37**

(84) Benannte Vertragsstaaten:
**BE DE FR GB NL**

(56) Entgegenhaltungen:
**DE - A - 2 806 463**
**DE - B - 2 249 727**
**DE - B - 2 615 041**
**US - A - 3 547 152**
**US - A - 4 207 864**

(73) Patentinhaber: **PKS-Engineering GmbH & Co. KG,
Regelkamp 12, D-4720 Beckum 2 (DE)** ·

(72) Erfinder: **Janich, Hans-Jürgen, Regelkamp 12,
D-4720 Beckum (DE)**

(74) Vertreter: **Tetzner, Volkmar, Dr.-Ing. Dr. Jur.,
Van-Gogh-Strasse 3, D-8000 München 71 (DE)**

**Beschreibung**

Die Erfindung betrifft eine schwenkbare Absperr- und Regelklappe, insbesondere für Heissgas-Rohrleitungen grosser Abmessungen, mit einer in Richtung der Schwenkachse grossen Klappenlänge, enthaltend einen zur Lagerung der Klappe und zur Übertragung des Klappen-Drehmoments dienenden, mit wenigstens einem Wellenelement versehenen zentralen Teil und einem die beiden Flügel der Klappe bildenden Flügelteil, der gegenüber dem zentralen Teil in Klappenlängsrichtung begrenzt beweglich ist.

In Heissgas-Rohrleitungen angeordnete Klappen unterliegen im Betrieb einer hohen Temperaturbeanspruchung. Bei grossen Abmessungen können hierdurch erhebliche Wärmedehnungen auftreten.

Um Undichtigkeiten durch Verformungen der Klappenflügel zu vermeiden, wurden bereits Klappen entwickelt, deren Welle begrenzt axial beweglich im Gehäuse gelagert und durch Federn zentriert im Klappengehäuse gehalten ist (DE-U-7 116 334.3). Bei einer solchen schwimmenden Lagerung kann sich der Klappenflügel nach allen Seiten gleichmässig ausdehnen. Probleme treten jedoch dadurch auf, dass sich insbesondere bei geschlossener Klappe die Klappenwelle bzw. das Nabenrohr einerseits und der Klappenflügel andererseits unterschiedlich ausdehnen, was zu Verspannungen führen kann.

Es wurde daher weiterhin bereits eine schwenkbare Absperr- und Regelklappe entwickelt, bei der die Flügelteile längsverschiebbar auf der Welle gelagert sind (DE-C-2 249 727). Die Flügelteile sind hierbei gegenüber der Welle versetzt und werden über Mitnehmer betätigt. Die Kraftübertragung von der Welle auf die Flügelteile erfolgt hierbei jedoch weitgehend punktförmig und auch nicht gleichmässig über die ganze Länge der Welle, was unterschiedliche Schliesskräfte der einzelnen Flügelteile zur Folge hat. Nachteilig ist weiterhin, dass für eine derartige Flügelausführung nur eine Abdichtung mit Dichtkonus in Betracht kommt, bei der die Dichtung die gesamte Dehnung des Flügels ausgleichen muss. Die Flügel derartiger Klappen sind daher in ihren Abmessungen begrenzt. Kleine Flügel bedingen andererseits bei Rohrleitungen grosser Abmessungen eine vielfache Zwischenlagerung der Wellen. Diese Lager liegen dabei unzugänglich in der Rohrleitung und sind den häufig staubhaltigen Heissgasen ausgesetzt. Schliesslich besteht bei dieser bekannten Ausführung auch die Gefahr von Anbackungen auf der Welle und einem dadurch bedingten Festsitzen der Flügelteile auf der Welle. Diese Gefahr ist um so grösser, als der Gleitsitz zwischen Welle und Klappenflügel ständig dem Angriff der staubhaltigen Heissgase ausgesetzt ist.

Aus der Praxis ist weiterhin eine schwenkbare Klappe bekannt, die im wesentlichen aus einer Welle und einem die Welle einschliessenden Flügelteil gebildet wird, der aus zwei Blechen besteht, die im zentralen Bereich einen Abstand entsprechend dem Durchmesser der Welle besitzen und zu den Flügelrändern hin zusammenlaufen. Dabei ist die Welle nur im Bereich ihres einen Endes über einen Bolzen mit dem Flügelteil fest verbunden, während die Verbindungen im übrigen Bereich der Länge durch Schraubbolzen erfolgen, die durch Langlöcher hindurchgreifen. Auf diese Weise können sich im Betrieb Welle und Flügelteil in Längsrichtung unabhängig voneinander ausdehnen.

Auch diese Ausführung ist jedoch mit wesentlichen Nachteilen behaftet. Die Kraftübertragung von der Welle auf den Flügelteil der Klappe erfolgt über die genannten Bolzen, d.h. weitgehend punktförmig, was hohe Scherkräfte bedingt. Der Flügelteil besitzt ferner aufgrund der erläuterten Gestaltung eine geringe Elastizität, was insbesondere bei grossen Abmessungen der Rohrleitung und Klappe und temperaturbedingten Verformungen zu Undichtigkeiten führt.

Der Erfindung liegt daher die Aufgabe zugrunde, unter Vermeidung der Mängel der geschilderten Ausführungen eine schwenkbare Absperr- und Regelklappe zu entwickeln, die insbesondere folgende Forderungen erfüllt:

– Der Flügelteil soll sich auch bei einer einseitigen hohen Temperaturbeanspruchung nicht in unzulässiger Weise verformen;

– um gewisse unvermeidbare Durchbiegungen auszugleichen, soll der Flügelteil eine ausreichende Elastizität besitzen;

– das zur Betätigung der Flügel (und insbesondere zur Erzeugung des Schliessdruckes) erforderliche Drehmoment soll von dem bzw. den Wellenelementen gleichmässig über die ganze Klappenlänge, unter Vermeidung punktförmiger Beanspruchungen, auf den Flügelteil übertragen werden;

– schliesslich soll der Flügelteil in der Schliessstellung einwandfrei bis zur Welle abdichtbar sein.

Diese Aufgabe wird erfindungsgemäss dadurch gelöst, dass der zentrale Teil wenigstens eine als Verwindungssteifer Formkörper ausgebildete, langgestreckte Schale aufweist, die das bzw. die Wellenelemente auf einer Klappenbreitseite mit Abstand umgibt, im Bereich ihrer beiden Enden über Nabenteile drehfest mit dem bzw. den Wellenelementen verbunden ist und im Bereich der Schalen-Längsränder mit dem Flügelteil über Verbindungselemente verbunden ist, die eine begrenzte Relativbewegung zwischen Schale und Flügelteil gestatten.

Bei der erfindungsgemässen Klappe sind die kritischen Zonen einerseits der Drehmomentübertragung von der Welle auf den Flügel und andererseits die Längsverschiebbarkeit zwischen Welle und Flügel räumlich voneinander getrennt. Das Drehmoment wird von dem bzw. den Wellenelementen (d.h. entweder von einer durchgehenden Welle oder von zwei Wellenstummeln) über Nabenteile und bewährte Konstruktionselemente (beispielsweise eine Passfeder) auf die langgestreckte Schale des zentralen Teiles übertragen, die einen verwindungssteifen Formkörper bildet. Die weitere Übertragung des Drehmomentes von dieser Schale auf den Flügelteil geschieht im Bereich der Schalen-Längsränder, d.h. in einem grösseren Abstand von der Achse der Welle (und demgemäss mit einem günstigen Hebelarm). Dabei ist günstig, dass die Verbindungselemente, die eine begrenzte Relativbewegung zwischen Schale und Flügelteil gestatten, im Hinblick auf ihre Anordnung im Bereich der Schalen-Längsränder nur mässig beansprucht sind.

Ein besonderer Vorteil der erfindungsgemässen Klappe liegt ferner in der Kombination einer hohen Verwindungssteifigkeit des zentralen Teiles und einer guten Elastizität des Flügelteiles. Dadurch wird das zur Betätigung der Klappe ausgeübte Drehmoment gleichmässig über die ganze Klappenlänge auf den Flügelteil übertragen, und es ist zugleich eine gute Anpassung des sehr elastischen Flügelteiles an die ortsfeste Dichtungsfläche gewährleistet. Diese hohe Steifigkeit des zentralen Teiles bei gleichzeitiger hoher Elastizität des Flügelteiles ist vor allem für grosse Flügellängen bei Heissgas-Rohrleitungen grosser Abmessungen von wesentlicher Bedeutung.

Die Welle der erfindungsgemässen Klappe ist durch den als langgestreckte Schale ausgebildeten zentralen Teil gegenüber dem Angriff staubhaltiger Heissgase weitgehend geschützt. Dabei ist von besonderem Vorteil, dass aufgrund der hohen Biege- und Verwindungssteifigkeit des zentralen Teiles selbst bei grössten Klappenlängen eine Zwischenlagerung nicht erforderlich ist, womit alle Probleme der Wartung schwer zugänglicher und einem hohen Verschleiss ausgesetzter Zwischenlagerstellen entfallen.

Diese und weitere Merkmale der Erfindung gehen aus den Unteransprüchen und der folgenden Beschreibung einiger in der Zeichnung veranschaulichter Ausführungsbeispiele hervor.

Es zeigen

Fig. 1 eine Aufsicht auf ein erstes Ausführungsbeispiel einer erfindungsgemässen Klappe;

Fig. 2 einen Schnitt längs der Linie II–II der Fig. 1;

Fig. 3 bis 6 Einzelteile der Klappe gemäss den Fig. 1 und 2;

Fig. 7 einen Schnitt durch die Verbindungsstelle zwischen Schale und Flügelteil;

Fig. 8 eine Perspektivansicht eines weiteren Ausführungsbeispieles;

Fig. 9 einen Schnitt durch eine weitere Variante.

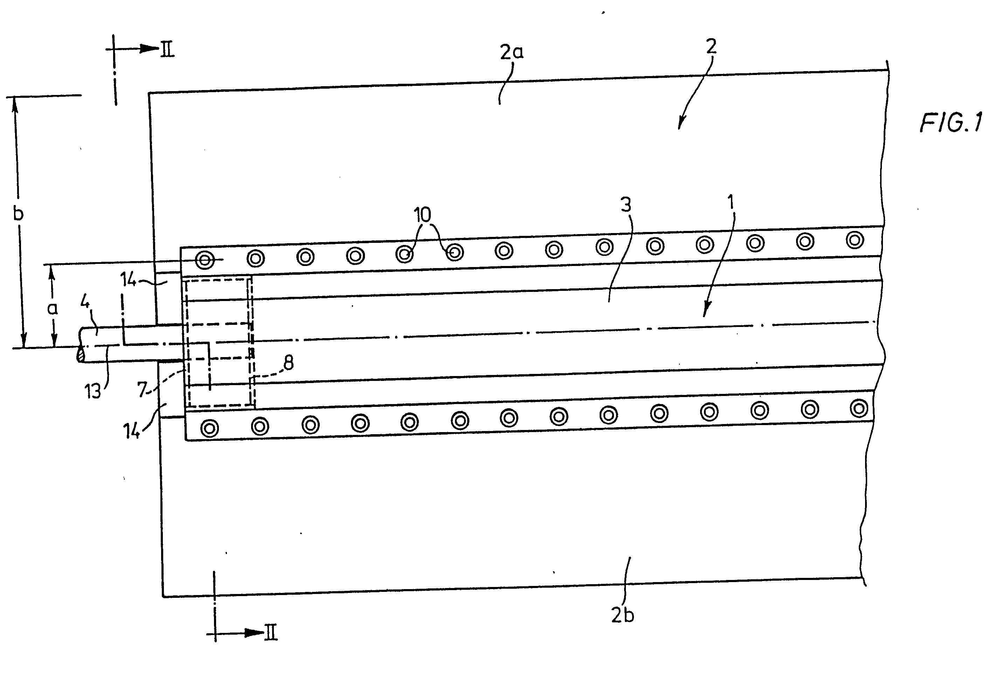

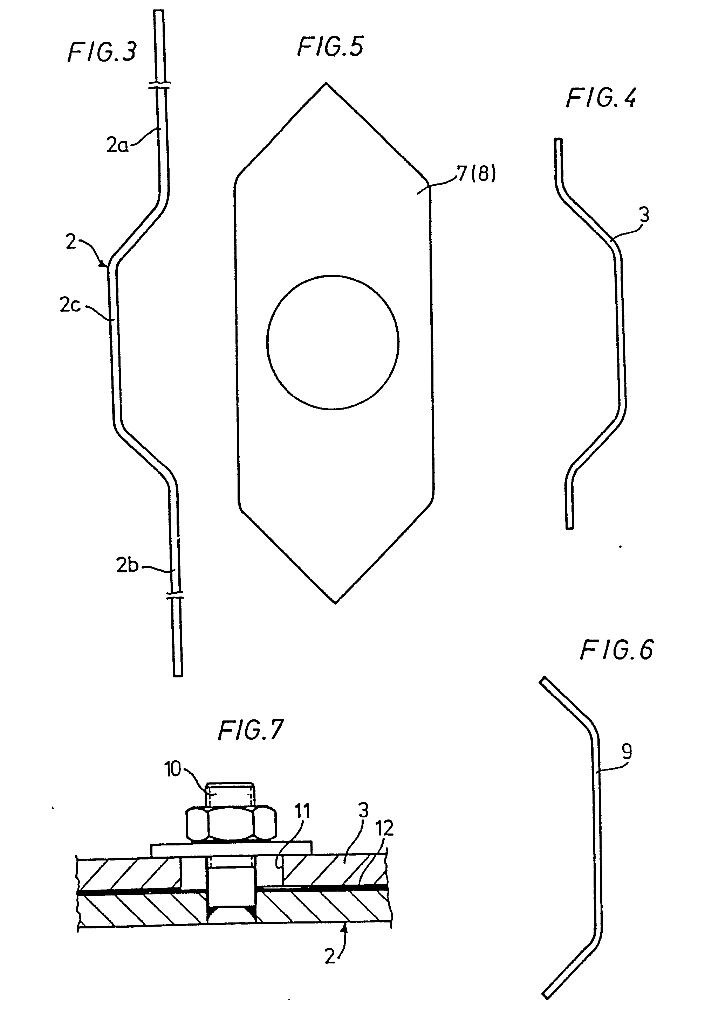

Die in den Fig. 1 bis 7 dargestellte schwenkbare Absperr- und Regelklappe, die insbesondere für Heissgas-Rohrleitungen grosser Abmessungen bestimmt ist, enthält einen zur Lagerung der Klappe und zur Übertragung des Klappen-Drehmomentes dienenden zentralen Teil 1 und einen die beiden Flügel 2a und 2b bildenden Flügelteil 2.

Der zentrale Teil 1 enthält eine langgestreckte Schale 3, die als verwindungssteifer Formkörper ausgebildet ist und sich ebenso wie der Flügelteil 2 nahezu über die gesamte Länge der Klappe erstreckt.

Der Flügelteil 2 ist in seinem mittleren Bereich 2c gleichfalls schalenförmig ausgebildet und ergänzt mit diesem schalenförmigen Bereich 2c den zentralen Teil 3 zu einem geschlossenen hohlen Formkörper.

Zur Schwenklagerung und zur Einleitung des Klappen-Drehmomentes dienen zwei an den Enden der Klappe vorgesehene Wellenstummel 4, die über eine Passfeder 5 mit einem Nabenteil 6 drehfest verbunden sind. Der Nabenteil 6 ist über zwei Knotenbleche 7 und 8 mit dem Flügelteil 2 verschweisst.

Im Bereich des Nabenteiles 6 ist ferner noch ein schalenförmiges Blech 9 vorgesehen, das mit dem Nabenteil 6 und den Knotenblechen 7 und 8 verschweisst ist.

Die langgestreckte Schale 3 des zentralen Teiles 1 ist im Bereich der Schalen-Längsränder mit dem Flügelteil 2 über Schraubbolzen 10 verbunden, die durch Langlöcher 11 der Schale 3 hindurchgreifen; diese Langlöcher 11 erstrecken sich in Klappenlängsrichtung und gestatten damit bei einer unterschiedlichen Wärmedehnung eine begrenzte Relativbewegung zwischen dem Flügelteil 2 und der Schale 3 in Klappenlängsrichtung. Zwischen der Schale 3 und dem Flügelteil 2 ist eine Kunststoff-Gleitfolie 12 angeordnet.

Der Abstand a, den die Schraubbolzen 10 (als Verbindungselemente zwischen dem Flügelteil 2 und der Schale 3) von der Schwenkachse 13 besitzen, entspricht dem 0,25- bis 0,5fachen, vorzugsweise dem 0,3- bis 0,4fachen Wert der halben Klappenbreite b. Diese Bemessung hat sich als optimal erwiesen, um einerseits die erwünschte hohe Biege- und Verwindungssteifigkeit des zur Kraftübertragung dienenden zentralen Hohlkörpers und andererseits die erwünschte Elastizität der Flügel 2a und 2b des Flügelteiles 2 zu erzielen.

Da der Flügelteil 2 geringfügig länger als der zentrale Teil 1 ist, sind in dem ausserhalb des Nabenteiles 6 liegenden Bereich Füllstücke 14 vorgesehen, die mit dem Flügelteil 2 verschweisst sind und die eine Verlängerung des Flügelteiles bis an den Wellenstummel 4 darstellen. Auf diese Weise ist die Rohrleitung auch im Bereich zwischen dem Nabenteil 6 und dem (nicht dargestellten) Klappengehäuse absperrbar.

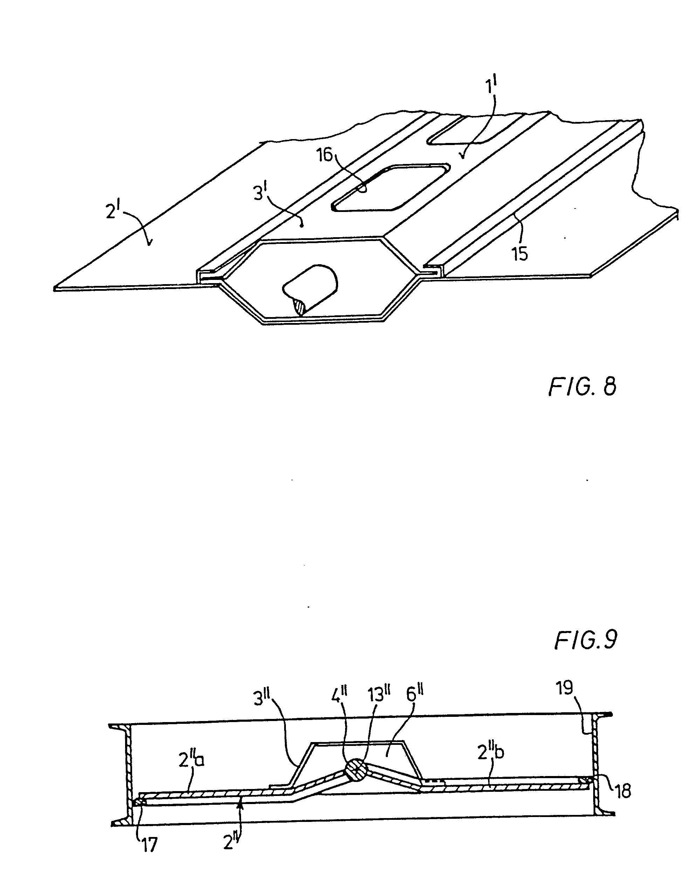

Fig. 8 zeigt ein weiteres Ausführungsbeispiel, bei dem die langgestreckte Schale 3' des zentralen Teiles 1' mit dem Flügelteil 2' über eine Gleitführung 15 verbunden ist. Auch durch eine solche Verbindung ist bei unterschiedlichen Wärmedehnungen des zentralen Teiles 1' und des Flügelteiles 2' eine begrenzte Relativbewegung zwischen diesen Teilen möglich. Bei diesem Ausführungsbeispiel ist ferner die Schale 3' des zentralen Teiles 1' mit Ventilationsdurchbrüchen 16 versehen, die bei sehr hohen Temperaturen eine bessere Wärmeabfuhr vom zentralen Teil der Klappe ermöglichen.

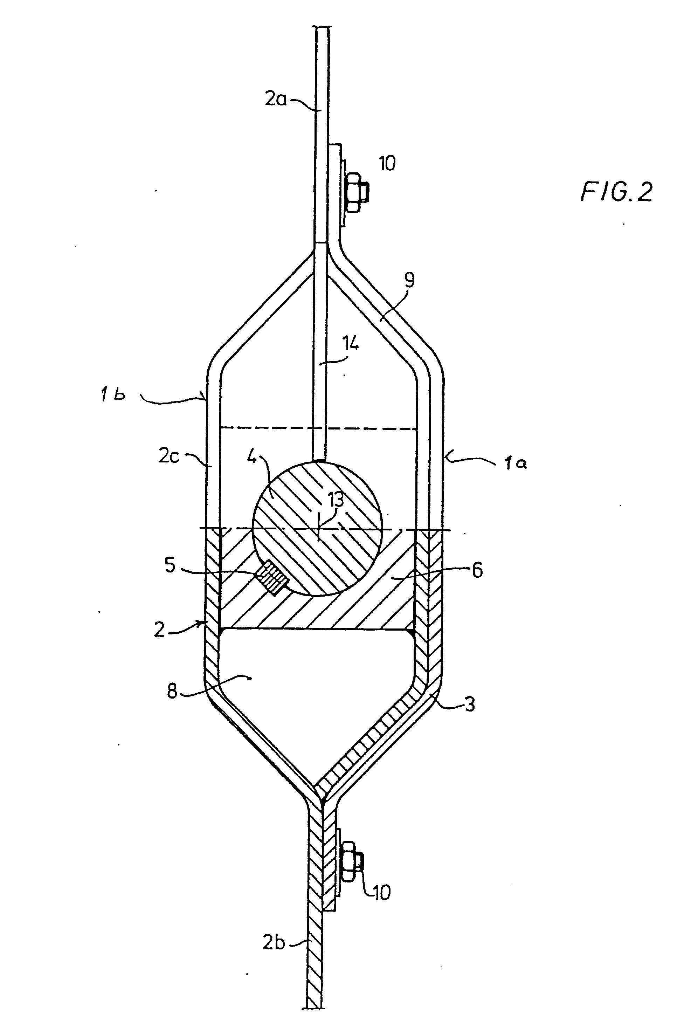

Während bei den oben erläuterten Ausführungsbeispielen die Schwenkachse (z.B. 13, vgl. Fig. 1 und 2) in der Ebene der beiden Flügel (z.B. 2a, 2b) liegt, veranschaulicht Fig. 9 ein Ausführungsbeispiel, bei dem die Schwenkachse 13″ gegenüber der Ebene der beiden Flügel 2″a, 2″b versetzt ist (Anordnung mit exzentrischer Welle 4″). Der Flügelteil 2″ ist hier in seinem mittleren Bereich zur Schwenkachse 13″ hin abgewinkelt.

Wie bei den zuvor erläuterten Ausführungsbeispielen umgibt die langgestreckte Schale 3″ die Welle 4″ mit Abstand und ist im Bereich ihrer beiden Enden über Nabenteile 6″ drehfest mit der Welle verbunden. Im Bereich der Schalen-Längsränder besteht zwischen der Schale 3″ und dem Flügelteil 2″ eine Verbindung, die eine begrenzte Relativbewegung in Klappenlängsrichtung gestattet. Bei diesem Ausführungsbeispiel wird der verwindungssteife hohle Formkörper, der den mittleren Teil der Klappe bildet, durch eine einzige Schale 3″ und den nach innen abgewinkelten Bereich des Flügelteiles 2″ gebildet.

Die Dichtungen, an denen der Flügelteil 2″ zur Anlage kommt, sind in Fig. 9 mit dem Bezugszeichen 17 und 18 versehen, das Klappengehäuse mit dem Bezugszeichen 19.

## Patentansprüche

1. Schwenkbare Absperr- und Regelklappe, insbesondere für Heissgas-Rohrleitungen grosser Abmessungen, mit einer in Richtung der Schwenkachse grossen Klappenlänge, enthaltend einen zur Lagerung der Klappe und zur Übertragung des Klappen-Drehmoments dienenden, mit wenigstens einem Wellenelement (4) versehenen zentralen Teil (1) und einem die beiden Flügel (2a, 2b) der Klappe bildenden Flügelteil (2), der gegenüber dem zentralen Teil (1) in Klappenlängsrichtung begrenzt beweglich ist, dadurch gekennzeichnet, dass der zentrale Teil (1) von länglichem Querschnitt (Fig. 2) wenigstens eine als verwindungssteifer Formkörper ausgebildete langgestreckte Schale (3) aufweist, die das bzw. die Wellenelemente (4) im Bereich der einen Klappenbreitseite (1a) mit Abstand umgibt, im Bereich ihrer beiden Enden über Nabenteile (6) drehfest mit dem bzw. den Wellenelementen (4) verbunden ist und im Bereich der Schalen-Längsränder mit dem Flügelteil (2) über Verbindungselemente (10) verbunden ist, die eine begrenzte Relativbewegung zwischen Schale und Flügelteil in Klappenlängsrichtung gestatten.

2. Klappe nach Anspruch 1, bei der die Schwenkachse in der Ebene der beiden Flügel liegt, dadurch gekennzeichnet, dass der Flügelteil (2) in seinem mittleren Bereich (2c) gleichfalls schalenförmig ausgebildet ist und mit diesem schalenförmigen Bereich den zentralen Teil (3) zu einem geschlossenen hohlen Formkörper ergänzt.

3. Klappe nach Anspruch 1, dadurch gekennzeichnet, dass jedes der beiden Wellenelemente (4) über eine Passfeder (5) drehfest mit einem Nabenteil (6) verbunden ist, der über zwei Knotenbleche (7, 8) mit dem Flügelteil (2) verschweisst ist.

4. Klappe nach Anspruch 1, dadurch gekennzeichnet, dass die langgestreckte Schale (3) des zentralen Teiles (1) mit dem Flügelteil (2) über Schraubbolzen (10) verbunden ist, die durch in Klappenlängsrichtung verlaufende Langlöcher (11) hindurchgreifen.

5. Klappe nach Anspruch 1, dadurch gekennzeichnet, dass der Flügelteil (2) in dem ausserhalb der Nabenteile (6) liegenden Bereich durch Füllstücke (14) bis an das Wellenelement (4) verlängert ist.

6. Klappe nach Anspruch 1, bei der die Schwenkachse gegenüber der Ebene der beiden Flügel versetzt ist, dadurch gekennzeichnet, dass der Flügelteil (2″) zur Schwenkachse (13″) hin abgewinkelt ist.

7. Klappe nach Anspruch 1, dadurch gekennzeichnet, dass die langgestreckte Schale (3″) des zentralen Teiles (1′) über eine Gleitführung (15) mit dem Flügelteil (2′) verbunden ist.

8. Klappe nach Anspruch 1, dadurch gekennzeichnet, dass die langgestreckte Schale (3′) des zentralen Teiles (1′) mit Ventilations-Durchbrüchen (16) versehen ist.

9. Klappe nach Anspruch 1, dadurch gekennzeichnet, dass zwischen der langgestreckten Schale (3) des zentralen Teiles (1) und dem Flügelteil (2) eine Kunststoff-Gleitfolie (12) angeordnet ist.

10. Klappe nach Anspruch 1, dadurch gekennzeichnet, dass der Abstand a, den die Verbindungselemente (10) zwischen Schale (3) und Flügelteil (2) von der Schwenkachse (13) besitzen, dem 0,25- bis 0,5fachen, vorzugsweise dem 0,3- bis 0,4fachen Wert der halben Klappenbreite (b) entspricht.

## Claims

1. A pivotal shut-off and control flap, more particularly for large hot-gas pipes, which is of considerable length in the direction of its pivoting axis and which comprises a central part (1) for mounting the flap and for transmitting the flap torque and provided with at least one shaft element (4) and which further comprises a vane section (2) which forms the two vanes (2a, 2b) of the flap and which is mounted for limited movement relative to the central part (1) in the longitudinal direction of the flap, characterised in that the central part (1) of oblong cross-section (Fig. 2) comprises at least one elongate shell (3) in the form of a torsion-resistant shaped element which surrounds the shaft element(s) (4) at a distance on one side of the flap, is fixedly connected at both ends to the shaft element(s) (4) through hub members (6) and, in the region of the longitudinal edges of the shell, is connected to the vane section (2) by connecting elements (10) which provide for a limited relative movement between the shell and the vane section in the longitudinal direction of the flap.

2. A flap as claimed in Claim 1 in which the pivoting axis lies in the plane of the two vanes, characterised in that the vane section (2) is also in the form of a shell at its centre (2c) and, through this shell-like region, makes the central part (3) into a coherent, hollow shaped element.

3. A flap as claimed in Claim 1, characterised in that each of the two haft elements (4) is fiexedly connected through a feather key (5) to a hub member (6) which is welded to the vane section (2) through two gusset plates (7, 8).

4. A flap as claimed in Claim 1, characterised in that the elongate shell (3) of the central part (1) is connected to the vane section through treaded bolts (10) which project through slots (11) extending in the longitudinal direction of the flap.

5. A flap as claimed in Claim 1, characterised in that in the region lying outside the hub members (6) the vane section (2) is extended by fillers (14) to the shaft element (4).

6. A flap as claimed in Claim 1 in which the pivoting axis is offset in relation to the plane of the two vanes, characterised in that the vane section (2″) is angled towards the pivoting axis (13″).

7. A flap as claimed in Claim 1, characterised in that the elongate shell (3″) of the central part (1′) is connected to the vane section (2′) by a low-friction guide (15).

8. A flap as claimed in Claim 1, characterised in that the elongate shell (3′) of the central part (1′) is provided with ventilation openings (16).

9. A flap as claimed in Claim 1, characterised in that a low-friction plastics film (12) is arranged between the elongate shell (3) of the central part (1) and the vane section (2).

10. A flap as claimed in Claim 1, characterised in that the distance (a) separating the connecting elements (10) between the shell (3) and the vane section (2) from the pivoting axis (13) corresponds to between 0,25 and 0,5 times and preferably to between 0,3 and 0,4 times half the width (b) of the flap.

## Revendications

1. Clapet oscillant d'arrêt et de réglage, de type papillon, destiné en particulier aux canalisations de gaz chauds à grandes dimensions, clapet ayant une grande longueur dans la direction de l'axe de pivotement et comprenant une partie centrale (1) destinée à son montage et à la transmission de son couple et comportant au moins un élément d'arbre (4), ce clapet comprenant par ailleurs un élément (2) formant les deux ailes (2a, 2b) et mobile de manière limitée dans la direction de la longueur du clapet par rapport à la partie centrale (1), clapet caractérisé en ce que la partie centrale (1) de section allongée (figure 2) comprend au moins une coque allongée (3), conformée en pièce profilée résistant à la torison, entourant à distance l'élément ou les éléments d'arbre (4) sur un côté large du clapet (1a) et solidarisée en rotation à proximité de ses deux extrémités avec l'élément ou les éléments d'arbre (4) au moyen d'éléments de moyeu (6), cette coque étant réunie au voisinage de ses bords longitudinaux à l'élément (2) formant les ailes au moyen d'organes de liaison (10) qui autorisent un déplacement relatif limité entre la coque et les ailes dans la direction de la longueur du clapet.

2. Clapet selon la revendication 1, dans lequel l'axe de pivotement se trouve dans le plan des deux ailes, caractérisé en ce que la partie centrale (2c) des ailes (2), qui est également conformée en coque, complète avec cette dernière la partie centrale (3) de manière à former une pièce profilée creuse et fermée.

3. Clapet selon la revendication 1, caractérisé en ce qu'une clavette (5) solidarise en rotation les deux éléments d'arbre (4) avec un élément de moyeu (6) qui est soudé aux ailes (2) par l'intermédiaire de deux goussets d'assemblage (7, 8).

4. Clapet selon la revendication 1, caractérisé en ce que des boulons filetés (10) qui passent dans des boutonnières (11) orientées dans la direction de la longueur du clapet, relient la coque allongée (3) de la partie centrale (1) à l'élément (2) formant les ailes.

5. Clapet selon la revendication 1, caractérisé en ce que l'élément (2) formant les ailes est prolongé par des pièces de remplissage (14) jusqu'à l'élément d'arbre (4) dans la région située à l'extérieur des éléments de moyeu (6).

6. Clapet selon la revendication 1, dans lequel l'axe de pivotement est décalé par rapport au plan des deux ailes, caractérisé en ce que l'élément (2″) formant les ailes est coudé vers l'axe de pivotement (13″).

7. Clapet selon la revendication 1, caractérisé en ce qu'une glissière (15) relie la coque allongée (3″) de la partie centrale (1″) aux ailes (2″).

8. Clapet selon la revendication 1, caractérisé en ce que la coque allongée (3′) de la partie centrale (1′) comporte des trous de ventilation (16).

9. Clapet selon la revendication 1, caractérisé en ce qu'une feuille de glissement (12) en matière plastique est disposée entre la coque allongée (3) de la partie centrale (1) et l'élément (2) formant les ailes.

10. Clapet selon la revendication 1, caractérisé en ce que la distance a à laquelle les éléments ou organes de liaison (10) de la coque (3) et des ailes (2) se trouvent par rapport à l'axe de pivotement (13), correspond à 0,25 à 0,5 fois, de préférence 0,3 à 0,4 fois la moitié de la largeur du clapet (b).

FIG.1

0 042 493

FIG.2

FIG.3

2a

2

2c

2b

FIG.5

7(8)

FIG.4

3

FIG.6

9

FIG.7

10

11

3

12

2

FIG. 8

FIG.9